# EUROPÄISCHE PATENTANMELDUNG

(11) **EP 4 191 352 A1**
(43) Veröffentlichungstag der Anmeldung: **07.06.2023**
(21) Anmeldenummer: 21211816.0
(22) Anmeldetag: 01.12.2021
(51) Int. Cl.: G05B 19/418, G05B 9/03

(54) **VORRICHTUNG UND VERFAHREN ZUR SICHERUNG DER BEWEGUNG EINES FÖRDERGUTES**

(71) Anmelder: Siemens Aktiengesellschaft, 80333 München (DE)
(72) Erfinder: Hofmann, Chris, 70563 Stuttgart (DE)
(74) Vertreter: Siemens Patent Attorneys

(57) **Zusammenfassung**

Die Erfindung betrifft eine Vorrichtung und ein Verfahren zur Sicherung der Bewegung eines Fördergutes (WST), wobei die Förderstrecke mit einem ersten Positionserfassungssystem (MG; FBMG) zur Erfassung der Position des Fördergutes (WST) als Eingangssignal für eine Antriebssteuerung (AS1, ..., AS4) des zumindest einen Segments (MS1, ..., MS3) der Förderstrecke ausgerüstet ist. Dabei weist die Förderstrecke ein zweites Positionserfassungssystem (MSTR; MK) zur Erfassung der Position des Fördergutes (WST) als Eingangssignal für eine Sicherheitssteuerung (F-CPU) des zumindest einen Segments (MS1, ..., MS3) der Förderstrecke auf, wobei das zweite Positionserfassungssystem (MSTR; MK) unabhängig von dem ersten Positionserfassungssystem (MG; FBMG) aufgebaut ist, wobei die Sicherheitssteuerung (F-CPU) zur Überprüfung einer durch das zweite Positionserfassungssystem (MSTR; MK) erfassten Position und/oder einer Bewegung des Fördergutes (WST) nach zumindest einem vorgegebenen Kriterium eingerichtet ist, und wobei die Sicherheitssteuerung (F-CPU) eine Datenschnittstelle zu der Antriebssteuerung (AS1, ..., AS4) aufweist, wobei mittels der Datenschnittstelle der Linearantrieb des betreffenden Segmentes (MS1, ..., MS3) in Abhängigkeit von einem Ergebnis der Überprüfung freigebbar oder sperrbar ist. Dadurch ist es möglich, dass die Bewegung des Fördergutes zumindest in einem dafür ausgestatteten Segment der Vorderstrecke redundant und sicher überwacht wird und der Antrieb im Falle einer Fehlfunktion oder bei der Verletzung vorgegebener Kriterien entsprechend gestoppt wird bzw. der Antrieb nur dann freigegeben wird, wenn die entsprechenden Kriterien erfüllt sind.

## Beschreibung

Die Erfindung betrifft eine Vorrichtung zur Sicherung der Bewegung eines Fördergutes gemäß dem Oberbegriff des Patentanspruchs 1, und ein Verfahren zur Sicherung der Bewegung eines Fördergutes gemäß dem Oberbegriff des Patentanspruchs 12.

In industriellen Automatisierungsanordnungen und ähnlichen Anlagen werden häufig Werkstücke und andere Gegenstände teil- oder vollautomatisch bewegt. Dazu kommen oft Förderer zum Einsatz, die das Fördergut transportieren. Im Folgenden soll als Fördergut der von den stationären Anlagenteilen bewegte Gegenstand bezeichnet werden, insbesondere ein Werkstückträger, ein Carrier für Stückgut oder Schüttgüter, ein Container oder dergleichen.

In vielen Automatisierungsanordnungen werden in bestimmten Bereichen, beispielsweise an Bearbeitungsstationen mit Bedienpersonal, besonders hohe Anforderungen an die Verfügbarkeit und Ausfallsicherheit von sogenannten Sicherheitsfunktionen gestellt, um eine Gefährdung von Menschen oder Schäden an Ausrüstungsgegenständen und Anlagenteilen sicher zu vermeiden. Die Erfüllung erhöhter Anforderungen für Sicherheitsfunktionen, wie sicherer Betriebshalt, sicher reduzierte Geschwindigkeit und sichere Bewegungsrichtung (im Folgenden auch als erweiterte Sicherheitsfunktionen bezeichnet) für Linearmotor basierte Transportsysteme mit segmentiertem Langstator werden häufig von Anwendern eben dieser Systeme gefordert.

Eine solche Anforderung kann beispielsweise dann bestehen, wenn ein Werkstück in einer Bearbeitungsstation mit geöffneter Schutztür verfahren werden soll, wobei bedingt durch die geöffnete Schutztür nicht auszuschließen ist, dass eine Person mit dem bewegten Fördergut bzw. Fördermittel in Kontakt kommt. Dabei ist also sicherzustellen, dass das Fördergut in dieser Situation nur langsam und innerhalb bestimmter Grenzen bewegt wird.

Aufgrund des Messprinzips verfügen die bekannten Fördersysteme allerdings nicht über eigensichere Motorgeber. Somit ist es nicht möglich, diese Systeme mit den erweiterten Sicherheitsfunktionen des verwendeten Antriebs zu betreiben.

Es ist daher eine Aufgabe der vorliegenden Erfindung, eine sichere Vorrichtung bzw. ein sicheres Verfahren für den Betrieb eines solchen Transportsystems insbesondere für Gefährdungsbereiche vorzuschlagen.

Es ist eine Kernidee der erfindungsgemäßen Lösung dieser Aufgabe, dass neben dem eigenen Messsystem, welches für die Ansteuerung des Antriebs des Transportsystems verwendet wird, ein weiteres, sogenanntes externes lineares Messsystem punktuell oder gesamtheitlich in das Transportsystem integriert wird, wobei weiterhin eine vorzugsweise redundant oder eigensicher bzw. ausfallsicher aufgebaute Sicherheitssteuerung vorgesehen ist, die die Signale dieses zusätzlichen, vorzugsweise ebenfalls ausfallsicheren Messsystems auswertet und hinsichtlich einer Plausibilität prüft und erforderlichenfalls das Antriebssystem stoppt bzw. nur im Falle des Vorliegens einer plausiblen zweiten Lage- oder Bewegungsinformation den Antrieb freigibt.

Die Aufgabe wird insbesondere durch eine Anordnung nach Patentanspruch 1 und durch ein Verfahren nach Patentanspruch 12 gelöst.

Dabei ist eine Vorrichtung zur Sicherung der Bewegung eines Fördergutes, insbesondere eines Werkstückträgers, auf einer Förderstrecke mit einem Linearantrieb mit einem Langstator mit zumindest einem Segment vorgesehen, wobei die Förderstrecke mit einem ersten Positionserfassungssystem zur Erfassung der Position des Fördergutes als Eingangssignal für eine Antriebssteuerung des zumindest einen Segments der Förderstrecke ausgerüstet ist. Dabei weist die Förderstrecke ein zweites Positionserfassungssystem zur Erfassung der Position des Fördergutes als Eingangssignal für eine Sicherheitssteuerung des zumindest einen Segments der Förderstrecke auf, wobei das zweite Positionserfassungssystem unabhängig von dem ersten Positionserfassungssystem aufgebaut ist, wobei die Sicherheitssteuerung zur Überprüfung einer durch das zweite Positionserfassungssystem erfassten Position und/oder einer Bewegung des Fördergutes nach zumindest einem vorgegebenen Kriterium eingerichtet ist, und wobei die Sicherheitssteuerung eine Datenschnittstelle zu der Antriebssteuerung aufweist, wobei mittels der Datenschnittstelle der Linearantrieb des betreffenden Segmentes in Abhängigkeit von einem Ergebnis der Überprüfung freigebbar oder sperrbar ist. Dadurch ist es möglich, dass die Bewegung des Fördergutes zumindest in einem dafür ausgestatteten Segment der Vorderstrecke redundant und sicher überwacht wird und der Antrieb im Falle einer Fehlfunktion oder bei der Verletzung vorgegebener Kriterien entsprechend gestoppt wird bzw. der Antrieb nur dann freigegeben wird, wenn die entsprechenden Kriterien erfüllt sind.

Die Aufgabe wird außerdem durch ein Verfahren zur Sicherung der Bewegung eines Fördergutes, insbesondere eines Werkstückträgers, auf einer Förderstrecke mit einem Linearantrieb mit einem Langstator mit zumindest einem Segment gelöst, wobei die Position des Fördergutes als Eingangssignal für eine Antriebssteuerung durch ein erstes Positionserfassungssystem erfasst wird. Dabei wird durch ein zweites Positionserfassungssystem die Position des Fördergutes als Eingangssignal für eine Sicherheitssteuerung des zumindest einen Segments der Förderstrecke erfasst, wobei das zweite Positionserfassungssystem die Position unabhängig von dem ersten Positionserfassungssystem erfasst, wobei durch die Sicherheitssteuerung eine durch das zweite Positionserfassungssystem erfasste Position und/oder einer Bewegung des Fördergutes nach zumindest einem vorgegebenen Kriterium überprüft wird, und wobei durch die Sicherheitssteuerung der Linearantrieb des betreffenden Segmentes in Abhängigkeit von einem Ergebnis der Überprüfung freigegeben oder gesperrt wird. Mittels dieses Verfahrens können die bereits anhand der Vorrichtung erläuterten Vorteile erzielt werden.

Vorteilhafte Ausgestaltungen der erfindungsgemäßen Vorrichtung sind in den abhängigen Patentansprüchen angegeben. Die dabei beschriebenen Merkmale und Vorteile gelten sinngemäß auch für das erfindungsgemäße Verfahren.

In einer vorteilhaften Ausgestaltung weist das zweite Positionserfassungssystem eigensichere Sensoren zur Erfassung der Position und/oder Bewegung des Fördergutes auf. Damit ist ein höheres Sicherheitslevel erreichbar, was oft zum Schutz von Personen gefordert wird.

In einer Ausgestaltung umfasst das zweite Positionserfassungssystem einen Absolutwertgeber für die Position des Fördergutes. Im Gegensatz zu der technisch ebenfalls möglichen Verwendung eines Inkrementalwertgebers muss hierbei nicht eine Indexposition angefahren werden und das Sicherheitssystem ist auch nach einem Neustart unmittelbar einsatzbereit. Zudem lassen sich die Signale von Absolutwertgebern besser hinsichtlich ihrer Plausibilität überprüfen, weil das entsprechende Signal komplexer ist - beispielsweise ein numerischer Positionswert.

In einer Ausgestaltung beruhen das erste Positionserfassung und das zweite Positionserfassungssystem auf unterschiedlichen Meßprinzipien, was die Gesamtsicherheit erhöht. So kann beispielsweise eines der Positionserfassungssysteme auf der optischen Abtastung einer Maßverkörperung, z.B. einer Barcode-Leiste, beruhen, während das andere Positionserfassungssystem beispielsweise das Abtasten einer Magnetspur vorsieht.

In einer Ausgestaltung ist das Fördergut ein Werkstückträger, ein Transportcontainer oder ein anderes für die Vorrichtung standardisiertes Fördergut. Einer der Vorteile dieser Ausgestaltung liegt darin, dass die Abmessungen des Fördergutes systemweit einheitlich sind, sodass eine gesonderte Kalibrierung des Sicherheitssystems für die unterschiedlichsten zu transportierenden Güter oder Werkstücke weitgehend entfallen kann.

In einer vorteilhaften Ausgestaltung ist für das zweite Positionserfassungssystem an dem Fördergut ein linearer Maßstab und an der Förderstrecke zumindest ein ortsfester Messaufnehmer vorgesehen. Ein Vorteil dieser Ausgestaltung liegt darin, dass der lineare Maßstab meist ein passives Bauteil ist, sodass das aktive Bauteil, nämlich der Messaufnehmer, ortsfest installiert werden kann, sodass eine flexible Leitungsführung oder eine drahtlose Signalübertragung oder ähnlich fehleranfällige Übertragungsmittel nicht notwendig sind.

In einer Ausgestaltung sind für das zweite Positionserfassungssystem an der Förderstrecke mehrere ortsfeste Messaufnehmer angeordnet, deren Abstand zueinander in einer Fahrtrichtung kleiner als die Länge des linearen Maßstabs ist. Dadurch lassen sich auch größere Segmente, die länger als der Maßstab an dem Fördergut (z.B. Werkstückträger) sind, lückenlos überwachen.

In einer Ausgestaltung ist das zumindest ein Kriterium eine jeweils genügende Übereinstimmung der von dem ersten Positionserfassungssystem ermittelten Positionsinformation mit derjenigen von dem zweiten Positionserfassungssystem ermittelten Positionsinformation. Somit wird also die Plausibilität der von dem Antrieb verwendeten Positionsinformation laufend überprüft. Dabei wird der Tatsache Rechnung getragen, dass eine korrekte Position Information unabdingbar für einen sicheren Systembetrieb ist.

Vorteilhaft ist das zumindest ein Kriterium ein genügender Abstand und/oder eine genügend langsame Annäherung des Fördergutes an eine Sicherheitsposition, insbesondere an einen möglichen Aufenthaltsort eines Menschen. Damit werden weitere Kriterien für das überwachte Segment laufend überwacht, also beispielsweise Geschwindigkeit, Abstand zu anderen Betriebsmitteln und zu Personen etc. Auch die Übereinstimmung der tatsächlichen Bewegung des Fördergutes mit dem von der Antriebssteuerung vorgegebenen Ansteuerungssignal für den Linearantrieb kann im Sinne eines Ist-Soll-Vergleichs überprüft werden, so dass festgestellt werden kann, ob das Fördergut bzw. der Werkstückträger oder dergleichen außer Kontrolle geraten ist.

In einer Ausgestaltung sind das erste Positionserfassungssystem oder andere sicherheitsrelevante Bauteile mit einer Manipulationserkennung ausgerüstet, deren Ausgangssignal durch die Sicherheitssteuerung überprüft wird. Eine solche Manipulationserkennung kann besonders vorteilhaft auch für die Sicherheitssteuerung selbst und das angeschlossene zweite Positionserfassungssystem vorgesehen werden. Somit kann festgestellt werden, wenn für die Betriebssicherheit erforderliche Betriebsmittel verändert oder außer Funktion gesetzt worden sind. Dann wird wie in den anderen Fällen, in denen ein Kriterium verletzt oder nicht erfüllt ist, sofort automatisch ein sicherer Systemzustand herbeigeführt werden, der insbesondere in einer Stilllegung des Antriebs bestehen kann. Selbstverständlich sind auch andere oder weitere Maßnahmen möglich, beispielsweise eine Umkehr der Bewegungsrichtung, die Ausgabe einer Warnung bzw. eines Alarms, eine automatische Dokumentation des detektierten Fehlerfalls etc.

In einer Variante kann auch vorgesehen sein, dass die Bewegung des Fördergutes durch die Sicherheitssteuerung gestoppt wird, sobald ein Verlassen des linearen Maßstabes aus einem Erfassungsbereich des zumindest einen ortsfesten Messaufnehmers detektiert wird. Das ist besonders vorteilhaft in solchen Betriebssituationen, in denen das Verlassen des überwachten Segmentes explizit nicht vorgesehen ist. In diesem Zusammenhang ist es besonders vorteilhaft, wenn die Sicherheitssteuerung von einer übergeordneten Anlagensteuerung Soll-Positionsdaten für das Fördergut übermittelt bekommt, die somit nicht nur in der Steuerung des Antriebs verwendet werden, sondern auch in der Sicherheitssteuerung zum Plausibilieren der tatsächlichen Position, die mittels des zweiten Positionserfassungssystems ermittelt wird.

Vorteilhaft umfasst die Sicherheitssteuerung eine ausfallsichere Steuerungsbaugruppe, also eine sogenannte F-CPU (Failsafe Central Processing Unit). Solche Steuerungsbaugruppen gibt es in verschiedenen Ausführungen, beispielsweise in zumindest zweifach redundantem Aufbau. Ebenso sind die Messmittel für das zweite Positionserfassungssystem in einer vorteilhaften Ausgestaltung redundant aufgebaut oder zumindest so aufgebaut, dass Störungen sicher erkannt werden können. Beispielsweise kann durch Auflichtsensoren ein Encoder mit Sinus-Cosinus-Signal realisiert werden, sodass sich durch das Sinussignal und das Cosinussignal zwei Signale ergeben, die zueinander eine gewisse Redundanz aufweisen und somit Fehler oder Unplausibilitäten erkennen lassen. Es ist auch möglich, als Eingangssignale für die Sicherheitssteuerung zwei Positionserfassungssysteme zu kombinieren, die günstigenfalls unterschiedlich aufgebaut sind. Beispielsweise kann ein System mit Absolutwertgeber mit einem inkrementellen System kombiniert werden.

Ein Ausführungsbeispiel der erfindungsgemäßen Vorrichtung wird nachfolgend anhand der Zeichnungen erläutert. Das Beispiel dient gleichzeitig der Erläuterung des erfindungsgemäßen Verfahrens.

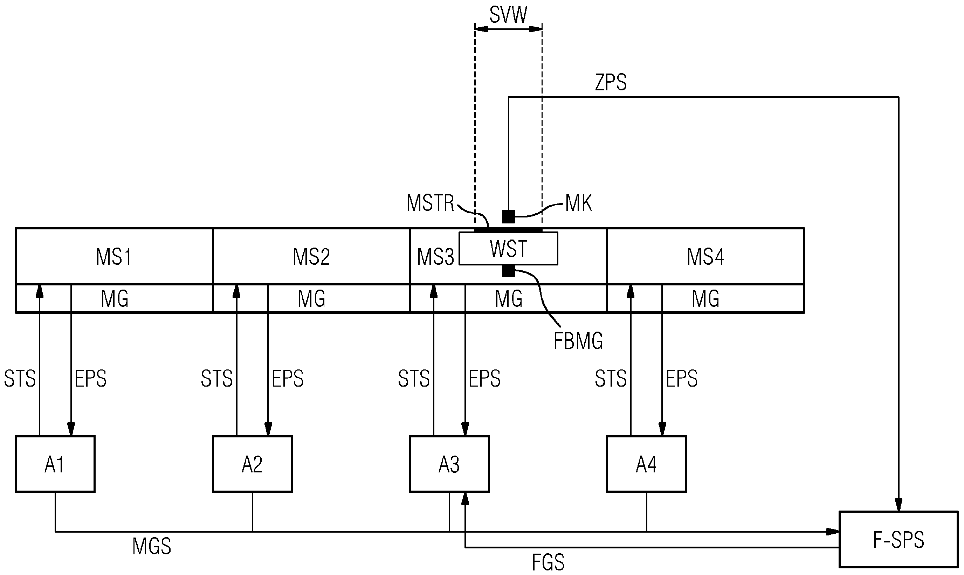

Dabei zeigt die einzige Figur in schematischer Darstellung eine Förderstrecke mit mehreren Segmenten, einem Werkstückträger, jeweils einer Antriebssteuerung für jedes Segment, einem ersten Positionserfassungssystem für die Antriebssteuerungen und eine Sicherheitssteuerung mit einem zweiten Positionserfassungssystem.

In der Figur ist eine Förderstrecke mit einem Langstator dargestellt, die aus den vier Motorsegmenten MS1, ..., MS4 besteht. Für jedes Motorsegment MS1, ..., MS4 ist je eine Antriebssteuerung A1, ..., A4 vorgesehen, wobei jede Antriebssteuerung A1, ..., A4 das zugeordnete Motorsegment mit einem Steuerungssignal STS ansteuert. Das Steuerungssignal STS kann insbesondere ein Dreiphasensignal für die drei Phasen eines abgewickelten Stators einer elektrischen Maschine angesehen werden. Jedes Motorsegment verfügt über einen eigenen Motorgeber MG als erstes, wobei das jeweilige Positionssignal EPS (erstes Positionssignal) von dem jeweiligen Motorgeber zu der jeweils zugeordneten Antriebssteuerung übermittelt wird. Das erste Positionserfassungssystem umfasst dazu einen mit dem Fördergut mitbewegten, beispielsweise ein Magnetelement.

Im Motorsegment MS3 ist als Fördergut ein Werkstückträger WST dargestellt, der eine Feedback-Einrichtung FBMG aufweist, welches mit dem stationären Teil des Motorgebers MG3 als erstes Positionserfassungssystem zusammenwirkt.

Die zuvor geschilderte Anordnung entspricht dem Schema eines klassischen linearen Fördersystems, bei dem eine Anzahl von Antriebsteuerungen eine Anzahl von Motorsegmenten ansteuert und das Fördergut entsprechend transportiert.

Der Werkstückträger WST, also das Fördergut, ist zur Erzeugung eines zweiten Positionssignal ZPS mit einem zweiten Positionserfassungssystem ausgerüstet, welches im wesentlichen aus einem Messstreifen MSTR als linearem Maßstab an dem Werkstückträger WST und einem stationären Messkopf MK als Messaufnehmer besteht. Das damit gewonnene zweite Positionssignal ZPS wird einer Sicherheitssteuerung F-SPS zugeführt, die gleichzeitig auch die vom ersten Positionserfassungssystem, nämlich den Motorgebern MG und der Feedback-Einrichtung FBMG erzeugte Lagesignal MGS von den Antriebssteuerungen erhält.

Aus dem von den Antriebssteuerungen bereitgestellten ersten Positionssignal bzw. Lagesignal MGS (Motorgeber-Signal) und dem zweiten Positionssignal ZPS und gegebenenfalls weiteren Signalen (nicht dargestellt) errechnet die Sicherheitssteuerung einen Plausibilitätswert, der in diesem Beispiel binär ausgestaltet ist, also beispielsweise zwischen plausibel und unplausibel unterscheidet. Beispielsweise kann der Plausibilitätswert dann "plausibel" sein, wenn bei Positionssignale MGS, ZPS annähernd gleich sind und die Geschwindigkeit des Fördergutes (Werkstückträger WST) unter einem Grenzwert liegt und die Position, die vom zweiten Positionserfassungssystem gemeldet ist, einen Mindestabstand zu einer Wartungsöffnung an der Strecke aufweist. Anhand des Plausibilitätswertes wird ein Freigabesignal FGS an die Antriebssteuerung A3 des überwachten Segmentes MS3 gesendet, wobei das Freigabesignal FGS die Bestromung des entsprechenden Antriebssegmentes freigibt - oder eben nicht.

Das zweite Positionserfassungssystem kann als eine sichere Encoderbaugruppe aufgebaut sein. Das Lagesignal der sicheren Encoderbaugruppe wird durch die Sicherheitssteuerung ausgewertet. Befindet sich nun ein Werkstückträger im Messbereich der Encoderbaugruppe, wird für eben dieses Segment / diese Segmente ggf. die Freigabe für die Bestromung des Antriebes erteilt. Als zusätzliche Redundanz kann die Sicherheitssteuerung neben dem Lagesignal der sicheren Encoderbaugruppe den Lage-Istwert des Motorgebers im Bewegungsbereich des Werkstückträgers überwachen und auf Plausibilität gegen das externe Messsystem prüfen.

Verlässt der Werkstückträger den Messbereich des externen Messsystems oder treten Unplausibilitäten in der Lageüberwachung auf, löst die Sicherheitssteuerung eine sichere Stop-Reaktion im Antriebssystem aus. Ebenso können Verfahrweg und Verfahrgeschwindigkeit durch die Sicherheitssteuerung fallweise überprüft werden, beispielsweise in den Fällen, in denen ein Sensor eine geöffnete Wartungstür erkennt. Ein sicherer Betrieb des Transportsystems ist somit beispielsweise mit offener Schutztür möglich, beispielsweise zum Einrichten einer Maschine.

## Patentansprüche

1. Vorrichtung zur Sicherung der Bewegung eines Fördergutes (WST), insbesondere eines Werkstückträgers, auf einer Förderstrecke mit einem Linearantrieb mit einem Langstator mit zumindest einem Segment (MS1, ..., MS3), wobei die Förderstrecke mit einem ersten Positionserfassungssystem (MG; FBMG) zur Erfassung der Position des Fördergutes (WST) als Eingangssignal für eine Antriebssteuerung (AS1, ..., AS4) des zumindest einen Segments (MS1, ..., MS3) der Förderstrecke ausgerüstet ist, **dadurch gekennzeichnet,**
**dass** die Förderstrecke ein zweites Positionserfassungssystem (MSTR; MK) zur Erfassung der Position des Fördergutes (WST) als Eingangssignal für eine Sicherheitssteuerung (F-CPU) des zumindest einen Segments (MS1, ..., MS3) der Förderstrecke aufweist,
**dass** das zweite Positionserfassungssystem (MSTR; MK) unabhängig von dem ersten Positionserfassungssystem (MG; FBMG) aufgebaut ist,
**dass** die Sicherheitssteuerung (F-CPU) zur Überprüfung einer durch das zweite Positionserfassungssystem (MSTR; MK) erfassten Position und/oder einer Bewegung des Fördergutes (WST) nach zumindest einem vorgegebenen Kriterium eingerichtet ist, und
**dass** die Sicherheitssteuerung (F-CPU) eine Datenschnittstelle zu der Antriebssteuerung (AS1, ..., AS4) aufweist, wobei mittels der Datenschnittstelle der Linearantrieb des betreffenden Segmentes (MS1, ..., MS3) in Abhängigkeit von einem Ergebnis der Überprüfung freigebbar oder sperrbar ist.

2. Vorrichtung nach Patentanspruch 1,
**dadurch gekennzeichnet,**
**dass** das zweite Positionserfassungssystem (MSTR; MK) eigensichere Sensoren zur Erfassung der Position und/oder Bewegung des Fördergutes (WST) aufweist.

3. Vorrichtung nach einem der vorhergehenden Patentansprüche,
**dadurch gekennzeichnet,**
**dass** das zweite Positionserfassungssystem (MSTR; MK) einen Absolutwertgeber für die Position des Fördergutes (WST) umfasst.

4. Vorrichtung nach einem der vorhergehenden Patentansprüche,
**dadurch gekennzeichnet,**
**dass** das Fördergut (WST) ein Werkstückträger, ein Transportcontainer oder ein anderes für die Vorrichtung standardisiertes Fördergut (WST) ist.

5. Vorrichtung nach einem der vorhergehenden Patentansprüche,
**dadurch gekennzeichnet,**
**dass** für das zweite Positionserfassungssystem (MSTR; MK) an dem Fördergut ein linearer Maßstab (MSTR) und an der Förderstrecke zumindest ein ortsfester Messaufnehmer (MK) vorgesehen ist.

6. Vorrichtung nach Patentanspruch 5,
**dadurch gekennzeichnet,**
**dass** für das zweite Positionserfassungssystem (MSTR; MK) an der Förderstrecke mehrere ortsfeste Messaufnehmer (MK) angeordnet sind, deren Abstand zueinander in einer Fahrtrichtung kleiner als die Länge des linearen Maßstabs (MSTR) ist.

7. Vorrichtung nach einem der vorhergehenden Patentansprüche,
**dadurch gekennzeichnet,**
**dass** das zumindest eine Kriterium eine jeweils genügende Übereinstimmung der von dem ersten Positionserfassungssystem (MG; FBMG) ermittelten Positionsinformation mit derjenigen von dem zweiten Positionserfassungssystem (MSTR; MK) ermittelten Positionsinformation des Fördergutes (WST) ist.

8. Vorrichtung nach einem der vorhergehenden Patentansprüche,
**dadurch gekennzeichnet,**
**dass** das zumindest eine Kriterium ein genügender Abstand und/oder eine genügend langsame Annäherung des Fördergutes (WST) an eine Sicherheitsposition, insbesondere an einen möglichen Aufenthaltsort eines Menschen, ist.

9. Vorrichtung nach einem der vorhergehenden Patentansprüche,
**dadurch gekennzeichnet,**
**dass** das erste Positionserfassungssystem (MG; FBMG) und/oder andere sicherheitsrelevante Bauteile mit einer Manipulationserkennung ausgerüstet sind und deren Ausgangssignal für die Überprüfung durch die Sicherheitssteuerung (F-CPU) vorgesehen ist.

10. Vorrichtung nach einem der Patentansprüche 5 - 9,
**dadurch gekennzeichnet,**
**dass** vorgesehen ist, dass die Bewegung des Fördergutes (WST) durch die Sicherheitssteuerung gestoppt wird, sobald ein Verlassen des linearen Maßstabes (MSTR) aus einem Erfassungsbereich des zumindest einen ortsfesten Messaufnehmers (MK) detektiert wird.

11. Vorrichtung nach einem der vorhergehenden Patentansprüche,
**dadurch gekennzeichnet,**
**dass** die Sicherheitssteuerung (F-CPU) eine ausfallsichere Steuerungsbaugruppe umfasst.

12. Verfahren zur Sicherung der Bewegung eines Fördergutes (WST), insbesondere eines Werkstückträgers, auf einer Förderstrecke mit einem Linearantrieb mit einem Langstator mit zumindest einem Segment (MS1, ..., MS3), wobei die Position des Fördergutes (WST) als Eingangssignal für eine Antriebssteuerung (AS1, ..., AS4) durch ein erstes Positionserfassungssystem (MG; FBMG) erfasst wird,
**dadurch gekennzeichnet,**
**dass** durch ein zweites Positionserfassungssystem (MSTR; MK) die Position des Fördergutes (WST) als Eingangssignal für eine Sicherheitssteuerung (F-CPU) des zumindest einen Segments (MS1, ..., MS3) der Förderstrecke erfasst wird, wobei das zweite Positionserfassungssystem (MSTR; MK) die Position unabhängig von dem ersten Positionserfassungssystem (MG; FBMG) erfasst,
**dass** durch die Sicherheitssteuerung (F-CPU) eine durch das zweite Positionserfassungssystem (MSTR; MK) erfasste Position und/oder einer Bewegung des Fördergutes (WST) nach zumindest einem vorgegebenen Kriterium überprüft wird, und
**dass** durch die Sicherheitssteuerung (F-CPU) der Linearantrieb des betreffenden Segmentes (MS1, ..., MS3) in Abhängigkeit von einem Ergebnis der Überprüfung freigegeben oder gesperrt wird.
